# EUROPEAN PATENT APPLICATION

(11) **EP 1 821 530 A2**
(43) Date of publication of application: **22.08.2007**
(21) Application number: 07250550.6
(22) Date of filing: 12.02.2007
(51) Int. Cl.: H04N 5/445

(54) **Graphic display device**

(30) Priority: 15.02.2006 JP 2006037682
(71) Applicant: ORION ELECTRIC CO., Ltd., Fukui 915-8555 (JP)
(72) Inventor: Kado, Takayuki, c/o Intellectual Prop. Dept., Echizen-city Fukui 915-8555 (JP)
(74) Representative: Paget, Hugh Charles Edward

(57) **Abstract**

The invention provides at low cost a graphic display device which can display video with a video signal in a predetermined format and includes an external input portion capable of having a signal other than the video signal in the predetermined format inputted thereto, where the graphic display device can notify a user in the case where an inputted video signal is in an unsupported format. A synchronizing signal is extracted by a video signal processing portion 16 from a video signal inputted from an external input portion 13, and it is determined whether or not the video signal is in an unsupported format by a microcontroller 17 so as to indicate that it is an unsupported signal on a display 15 according to a determination result. It is thereby possible to realize the function just by handling of software of the microcontroller with no need to change a circuit configuration.

## Description

### BACKGROUND OF THE INVENTION

### Field of the Invention

The present invention relates to a graphic display device, and in particular, to the graphic display device which can display a video signal compliant with a predetermined format as video and includes an external input portion capable of having a signal other than the video signal compliant with the predetermined format inputted thereto.

### Description of the Related Art

As for video formats which are used for a television broadcast or the like, there are multiple video formats (differentiated between HDTV: High-Definition Television and SDTV: Standard Definition Television, between an interlace method and a progressive method, and the like). Concerning graphic display devices for displaying them, there are a device capable of displaying video only in a specific video format, a device supporting all the video formats, and the like.

In the case of the graphic display device supporting all the video formats, it is necessary to determine the format of an inputted video signal in order to display the television broadcast received by a tuner and a video signal_inputted from an external input-output terminal (inputted from an external device such as a DVD player) as video (it is also necessary to do so in order to display the video as-is in the inputted format (without downconverting or upconverting it) as much as possible). Conventional techniques relating to determination of the video format are disclosed in Japanese Patent Laid-Open Publication Nos. 2001-111914, 2002-77766, 2002-84474, and 2002-369096 (Patent Documents 1 to 4) and the like. In addition, Japanese Patent Laid-Open Publication No. 2001-285728 (Patent Document 5) discloses a conventional technique relating to the device capable of displaying video only in a specific video format, wherein it is determined whether or not the video signal inputted from the external input-output terminal is in an unsupported format and if in the unsupported format, notice to that effect is given.

For instance, in the case where the graphic display device only supporting a video format of 480i includes a component video terminal or a D video terminal, there is a possibility that a signal such as 1080i (other than the video format of 480i) may be inputted from the external device such as a DVD player. If no measure has been taken on the device side in such a case, no video is displayed on a screen so that it becomes very inconvenient for a user (the user has no idea what problem causes an image not to be displayed) . If the technique disclosed by Patent Document 5 is applied to this, the user is notified in the case of the unsupported format so that the problem can be solved. However, it requires means for determining the format of the video signal (such as a circuit for monitoring output voltages of three identifying signal lines included in a D terminal cable).

The device only supporting a video format of 480i can be referred to as a low-grade product, and so more importance is attached to a cost aspect than a functional aspect. Therefore, furnishing of the means for determining the format of the video signal as disclosed in each of the Patent Documents (the circuit formed for this purpose) does not meet a request regarding cost and also requires extra circuit space.

### SUMMARY OF THE INVENTION

In view of the above-mentioned points, an object of the present invention is to provide at low cost the graphic display device which can display a video signal compliant with a predetermined format as video and includes an external input portion capable of having a signal other than the video signal compliant with the predetermined format inputted thereto, where the graphic display device can notify the user in the case where the inputted video signal is in an unsupported format.

A graphic display device according to a first aspect includes: a display; a tuner portion for receiving a broadcast signal of each frequency; a received signal conversion portion for converting the broadcast signal inputted from the tuner portion into a video signal compliant with a predetermined format; an external input portion for inputting a signal from an external device; a video signal processing portion for displaying the video signal compliant with the predetermined format on the display, the video signal processing portion capable of extracting a synchronizing signal included in the video signal in the case where the video signal inputted from the received signal conversion portion or the external input portion is the signal compliant with the predetermined format; and a control portion, and the graphic display device is characterized in that: a storage portion having warning information stored therein and an OSD generating portion are provided so that, in the case where the synchronizing signal extracted by the video signal processing portion is determined not to be the synchronizing signal compliant with the predetermined format by the control portion, a warning based on the warning information is displayed on the display by the OSD generating portion and the video signal processing portion.

According to the configuration, it is determined by the control portion whether or not the video signal is a signal in the format displayable (a signal compliant with the predetermined format) based on the synchronizing signal extracted by the video signal processing portion. In the case of the video signal in an undisplayable format, the warning based on the warning information stored in the storage portion is displayed on the display. As for the "received signal conversion portion for converting into a video signal compliant with a predetermined format," it is not limited to conversion into one specific format but may also support multiple formats. The "signal compliant with the predetermined format" refers to a signal generated in accordance with predetermined specifications. A "signal completely the same as the specifications" is a concept also including a "signal which can be regarded as the signal generated in accordance with the specifications though not completely the same."

A graphic display device according to a second aspect is the graphic display device according to the first aspect, characterized in that the external input portion is a D video terminal or a component video terminal.

A graphic display device according to a third aspect is the graphic display device according to the first or second aspect, characterized in that the predetermined format is a video format of 480i, and the video signal processing portion has a circuit configuration for displaying a video signal compliant with the video format of 480i on the display.

A graphic display device according to a fourth aspect is the graphic display device according to any one of the first to third aspect, characterized in that: the warning information includes a warning to the effect that "no video signal has been inputted to the external input portion, or a video signal not displayable on this device has been inputted to the external input portion" and a warning to the effect that "a video signal not displayable on this device has been inputted to the external input portion"; the warning based on the former warning information is displayed in the case where it is determined by the control portion that there is no synchronizing signal extracted by the video signal processing portion; and the warning based on the latter warning information is displayed in the case where it is determined by the control portion that although there is the synchronizing signal extracted by the video signal processing portion, it is not the synchronizing signal compliant with the predetermined format.

According to the configuration, in the case where the synchronizing signal is detected from the video signal inputted from the external input portion and is determined to be the synchronizing signal not compliant with the predetermined format, the warning to the effect that "a video signal not displayable on this device has been inputted to the external input portion" is displayed. In the case where no synchronizing signal is detected from the video signal inputted from the external input portion, the warning to the effect that "no video signal has been inputted to the external input portion, or a video signal not displayable on this device has been inputted to the external input portion" is displayed.

A graphic display device according to a fifth aspect is the graphic display device according to any one of the first to fourth aspects, further comprising: an operating portion as a user interface, and characterized in that: a warning erasure key is provided to the operating portion so as not to display the warning in the case where there is an input of the warning erasure key during display of the warning.

According to the configuration, the warning can be erased by operating the operating portion (input of the warning erasure key) during the display of the warning. As for the "warning erasure key, " it is not limited to furnishing of a dedicated button or the like thereto but may also be a button or the like which doubles as another function.

A graphic display device according to a sixth aspect is the graphic display device according to any one of the first to fifth aspects, further comprising: an operating portion as a user interface, and characterized in that: a reference parameter for determining whether or not the synchronizing signal extracted by the video signal processing portion is compliant with the predetermined format is stored in the storage portion; and if there is a setting change instruction to the operating portion from a user, the reference parameter is changed according to the instruction and stored in the storage portion.

According to the configuration, a user can set up a condition for determining that the synchronizing signal extracted from the video signal inputted from the external input portion is "not compliant with the predetermined format," that is, what degree of error of the synchronizing signal against the synchronizing signal in the predetermined format warrants the determination.

According to the graphic display device of the first aspect including: a display; a tuner portion for receiving a broadcast signal of each frequency; a received signal conversion portion for converting the broadcast signal inputted from the tuner portion into a video signal compliant with a predetermined format; an external input portion for inputting a signal from an external device; a video signal processing portion for displaying the video signal compliant with the predetermined format on the display, the video signal processing portion capable of extracting a synchronizing signal included in the video signal in the case where the video signal inputted from the received signal conversion portion or the external input portion is the signal compliant with the predetermined format; and a control portion, and characterized in that: a storage portion having warning information stored therein and an OSD generating portion are provided so that, in the case where the synchronizing signal extracted by the video signal processing portion is determined not to be the synchronizing signal compliant with the predetermined format by the control portion, a warning based on the warning information is displayed on the display by the OSD generating portion and the video signal processing portion, it is determined whether or not the video signal is compliant with the format displayable by the graphic display device based on the synchronizing signal extracted by the video signal processing portion so as to display the warning on the display in the case of the video signal in an undisplayable format. The video signal processing portion has a function of extracting the synchronizing signal from the video signal compliant with the format displayable by the graphic display device without exception (the video cannot be normally displayed unless the synchronizing signal is extracted). The present invention utilizes the function to determine through the control portion whether or not the video signal is compliant with the format displayable by the graphic display device based on the synchronizing signal thereby obtained. Therefore, it does not require a special circuit configuration or the like for making a "determination as to whether or not the video signal is compliant with the format displayable by the graphic display device." Thus, it is possible to provide at low cost a user-friendly graphic display device which can notify the user in the case where the inputted video signal is in an unsupported format. It also contributes to miniaturization of the device (because no extra circuit is required).

According to the graphic display device of the fourth aspect which is the graphic display device according to any one of the first to third aspects, characterized in that: the warning information includes a warning to the effect that "no video signal has been inputted to the external input portion, or a video signal not displayable on this device has been inputted to the external input portion" and a warning to the effect that "a video signal not displayable on this device has been inputted to the external input portion"; the warning based on the former warning information is displayed in the case where it is determined by the control portion that there is no synchronizing signal extracted by the video signal processing portion; and the warning based on the latter warning information is displayed in the case where it is determined by the control portion that although there is the synchronizing signal extracted by the video signal processing portion, it is not the synchronizing signal compliant with the predetermined format, the warning to the effect that "a video signal not displayable on this device has been inputted to the external input portion" is displayed in the case where the synchronizing signal is detected from the video signal inputted from the external input portion (that is, in the case where it can be determined that some signal has been inputted) and is determined to be the synchronizing signal not compliant with the predetermined format, and the warning to the effect that "no video signal has been inputted to the external input portion, or a video signal not displayable on this device has been inputted to the external input portion" is displayed in the case where no synchronizing signal is detected from the video signal inputted from the external input portion. To be more specific, the contents of the warning display changes according to a situation of detection of the synchronizing signal (the problem is identified further in detail) so that a more user-friendly device can be provided.

According to the graphic display device of the sixth aspect which is the graphic display device according to any one of the first to fifth aspects, further comprising: an operating portion as a user interface, and characterized in that: a reference parameter for determining whether or not the synchronizing signal extracted by the video signal processing portion is compliant with the predetermined format is stored in the storage portion; and if there is a setting change instruction to the operating portion from a user, the reference parameter is changed according to the instruction and stored in the storage portion, the user can set up the range for determining that the synchronizing signal extracted from the video signal inputted from the external input portion is "not compliant with the predetermined format," that is, what degree of error of the synchronizing signal against the synchronizing signal in the predetermined format warrants the determination. Therefore, a more user-friendly device can be provided. To be more specific, there are also the cases where, depending on a use environment of the user (external apparatuses to be connected), the error against a standard signal (predetermined format) becomes larger so that the warning may be given to a substantially displayable signal each time, which is cumbersome to the user. According to the configuration, however, the user can set up the range for the determination of "not compliant with the predetermined format." This increases convenience for the user. A setup change of the reference parameter is a concept which includes a setup for turning off a "function of determining whether or not the video signal is compliant with the format displayable by the graphic display device and displaying the warning."

### BRIEF DESCRIPTION OF THE DRAWINGS

FIG. 1 is a block diagram showing an overview of a configuration of a CRT according to the present invention;
FIG. 2 is a flowchart showing an overview of an operation of the CRT according to the present invention;
FIG. 3 is a perspective view showing an appearance of the CRT (a state in which a DVD player as an external device is connected);
FIGS. 4A and 4B are diagrams showing examples of a display screen (warning display screen);
FIG. 5 is a flowchart showing an overview of a process for changing a setup of a function of a second embodiment according to the present invention;
FIGS. 6A and 6B are diagrams showing examples of the display screen (setup change screen);
FIG. 7 is a flowchart showing an overview of the operation of the CRT of the second embodiment according to the present invention; and
FIGS. 8A and 8B are diagrams showing examples of the display screen (warning display screen).

### DETAILED DESCRIPTION OF THE PREFERRED EMBODIMENTS

Hereunder, concrete embodiments of the present invention will be described with reference to the drawings. The following embodiments are forms for embodying the present invention, and are not intended to limit the present invention within the range thereof.

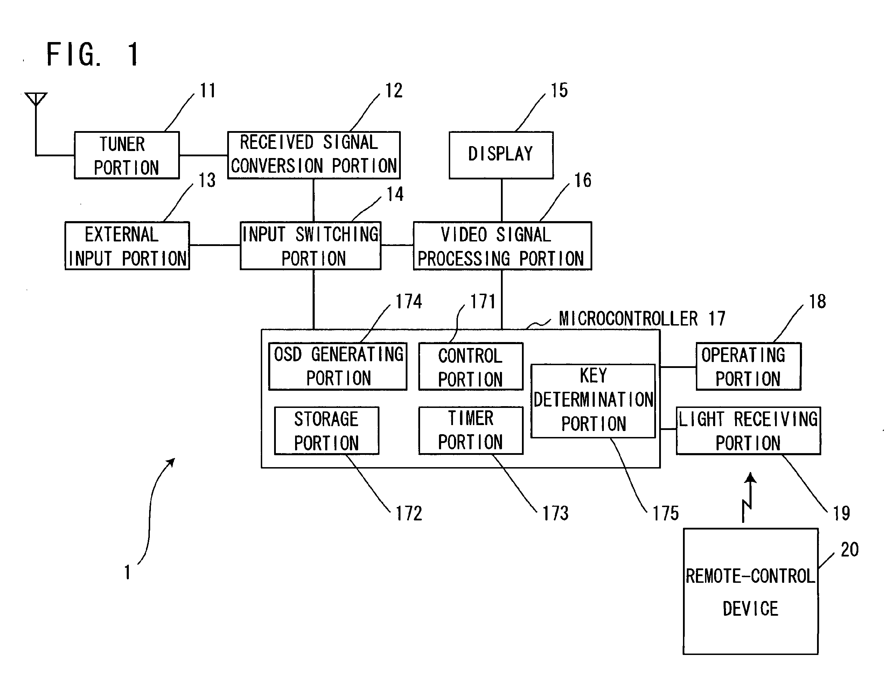

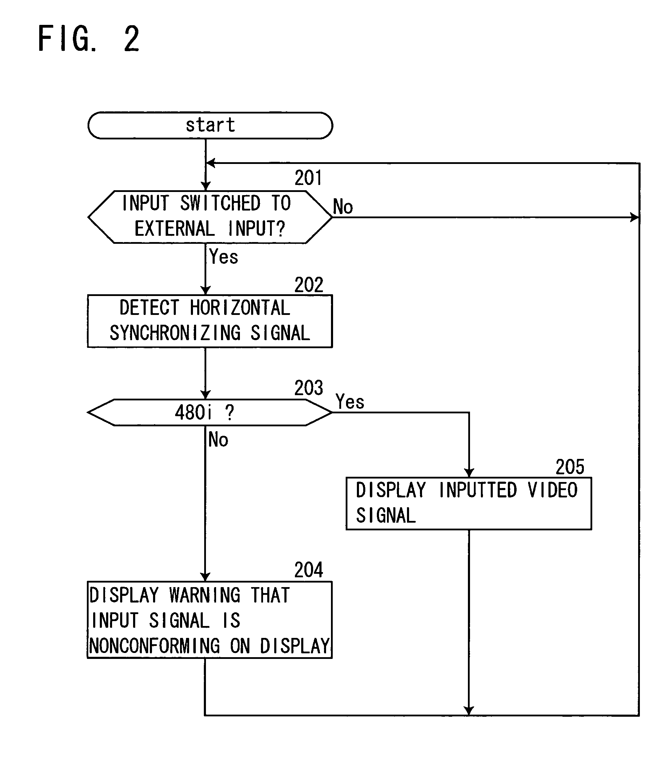

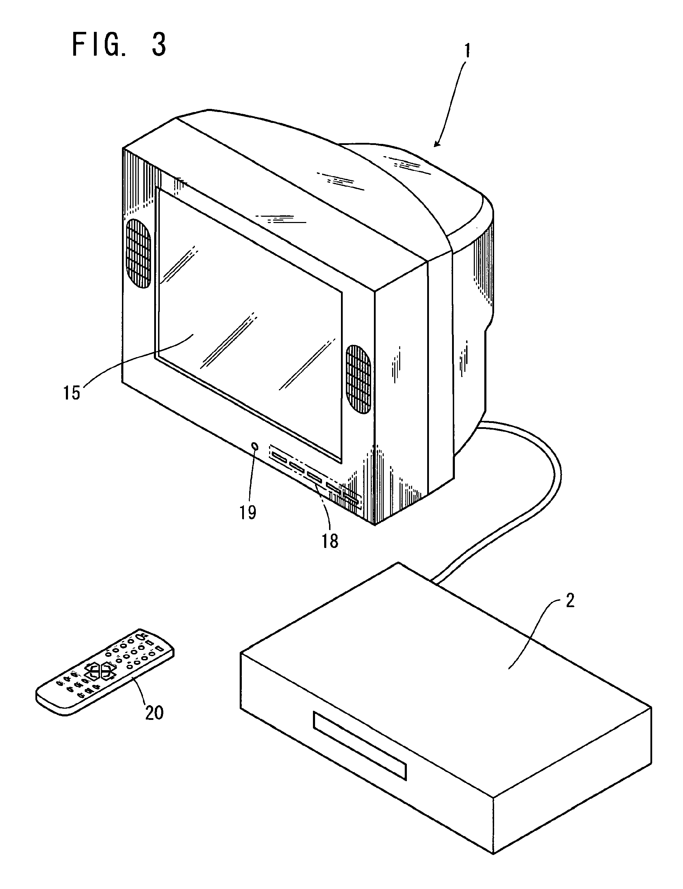

FIG. 1 is a block diagram showing an overview of a configuration of a graphic display device using a cathode-ray tube of this embodiment (merely a CRT hereafter) according to the present invention. FIG. 2 is a flowchart showing an overview of an operation of the CRT according to the present invention. FIG. 3 is a perspective view showing an appearance of the CRT (a state in which a DVD player as an external device is connected).

As shown in FIG. 1, a CRT 1 of this embodiment includes a tuner portion 11 for receiving a broadcast signal of each frequency, a received signal conversion portion 12 for performing processes such as generation of a video signal of which number of effective scanning lines is 480i from a signal inputted from the tuner portion 11, an external input portion 13 as a terminal for connection with an external apparatus (a recording and reproducing device such as a DVD recorder) and composed of a D video terminal, a component video terminal or the like, an input switching portion 14 for switching and outputting a signal from the received signal conversion portion 12 or the external input portion 13, a display 15, a video signal processing portion 16 for performing processes (separation of a synchronizing signal, generation of an RGB signal and the like) such as generation of a video signal for displaying video on the display 15 from the signal (video signal of which number of effective scanning lines is 480i) inputted from the input switching portion 14, a microcontroller 17, and a light receiving portion 19 for receiving signals from an operating portion 18 as an input interface to the device and a remote-control device 20 which is also an input interface.

The microcontroller 17 includes a control portion 171 for controlling the entire device, performing various kinds of arithmetic processing and the like, a storage portion 172 as storage means, a timer portion 173 as timing means, an OSD generating portion 174 for generating an on-screen display (merely an OSD hereafter) signal, a key determination portion 175 for determining and outputting a signal from the operating portion 18 or the light receiving portion 19.

The tuner portion 11 includes an analog tuner and a digital tuner and is capable of receiving a broadcast signal such as 1080i (HDTV) as the number of effective scanning lines. However, the display 15 and the video signal processing portion 16 only support 480i (SDTV) as the number of effective scanning lines (all the broadcast signals such as 1080i (HDTV) as the number of effective scanning lines are converted to the video signals of which number of effective scanning lines is 480i by the received signal conversion portion 12). Thus, the CRT 1 can also receive the broadcast signals such as HDTV. However, the video is displayed in a video format of 480i ("the video is displayed by the video signal compliant with the video format of 480i, " where "compliant" may be omitted or it may be merely described as "480i" or the like hereafter which indicates the same unless noted otherwise).

To be more precise, in the case of receiving analog broadcasting, an analog broadcast signal received by an analog tuner is converted into a video intermediate frequency signal (a video IF signal hereafter). A video signal having a luminance signal and a color signal separated from the video IF signal is generated in the received signal conversion portion 12 to which the video IF signal has been inputted from the tuner portion 11. In the case where the received signal is not the signal of which number of effective scanning lines is 480i, it is converted into the video signal of which number of effective scanning lines is 480i. In the case of receiving digital broadcasting, a digital demodulation process, a decoding process compliant with MPEG standards or the like is performed to a digital broadcast signal received by a digital tuner, and the video signal having the luminance signal and the color signal separated therefrom is further generated. In the case where the received signal is not the signal of which number of effective scanning lines is 480i, it is converted into the video signal of which number of effective scanning lines is 480i as previously described.

In the case where the video signal of which number of effective scanning lines is 480i is inputted, the video signal processing portion 16 can normally perform the process of extracting the synchronizing signals (a vertical synchronizing signal and a horizontal synchronizing signal) from the signal, generating the RGB signal and displaying the video on the display 15. There is a possibility, however, that a signal other than the video signal of which number of effective scanning lines is 480i may be inputted from the external input portion 13 composed of a D video terminal, a component video terminal and the like (although the component video terminal has a capability of transmitting the signal of 1080i and there are specifications of a D1 terminal to a D5 terminal corresponding to the video formats as to the D video terminal, the terminals are in the same form so that there is a possibility that the D5 terminal may be connected to the device only supporting the D1 terminal). Therefore, in the case where a signal other than the video signal of which number of effective scanning lines is 480i is inputted via the input switching portion 14, the process of displaying the video on the display 15 cannot be normally performed (the process of extracting the synchronizing signals from the signal cannot be normally performed either (not that "no synchronizing signal can be extracted" but that "accurate extraction of the synchronizing signals is not guaranteed")).

A description will be given by referring to FIG. 2 as to an overview of the operation of the CRT 1 according to the present invention. The storage portion 172 has data (warning information) to the effect that "no video signal has been inputted. Or else, a video signal not displayable on this device has been inputted to the external input portion" stored therein.

In a step 201, it is determined whether or not the external input portion 13 has been selected as a video source. Selection of the video source is directed by operation of the operating portion 18 or the remote-control device 20 by a user, and is performed by switching the input switching portion 14 according to a direction of the user by means of the control portion 171. An external device 2 (such as a DVD player) is connected to the external input portion 13 so that the video signal from the external device 2 is inputted to the video signal processing portion 16 via the input switching portion 14.

In the case where it is determined by the control portion 171 that the external input portion 13 has been selected as the video source, it moves on to a step 202 to perform a horizontal synchronizing signal detection process. In the process, a cycle of the horizontal synchronizing signal inputted from the video signal processing portion 16 (the synchronizing signal extracted from the video signal from the external device 2) is determined by the microcontroller 17. To be more precise, it is performed by measuring an interval of each of the inputted horizontal synchronizing signals by means of the timer portion 173 and the control portion 171.

In a following step 203, it is determined whether or not the video signal inputted from the external device 2 is the video signal of which number of effective scanning lines is 480i. The determination is made by determining whether or not the cycle of the horizontal synchronizing signal obtained in the step 202 corresponds to the cycle of the horizontal synchronizing signal in the video format of 480i (about 63 µs since a horizontal frequency is 15.7 kHz or so) (a permissible error range against about 63 µs is stipulated as appropriate). As previously described, the video signal processing portion 16 does not support extraction of the synchronizing signal from a signal other than that in the video format of 480i. Therefore, the microcontroller 17 can only effectively determine "whether or not corresponding to the video format of 480i" when determining the video format by detecting the cycle of the horizontal synchronizing signal.

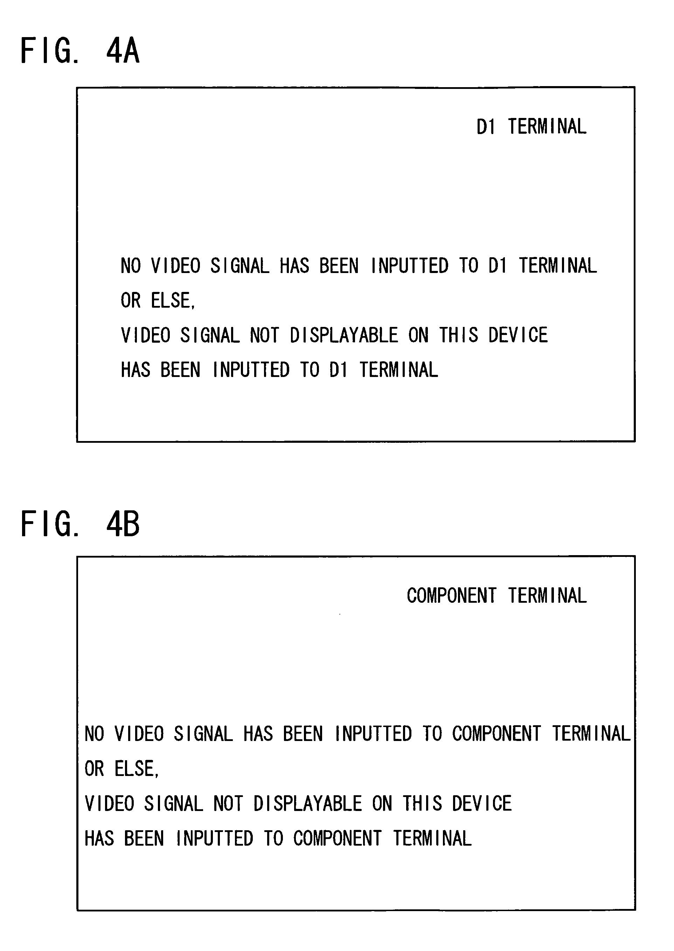

In the case where it is determined that the video signal inputted from the external device 2 is the video signal of which number of effective scanning lines is 480i as a result of the determination in the step 203, the video is displayed on the display 15 based on the video signal (step 205). If determined not to be the video signal of 480i, the data to the effect that "no video signal has been inputted. Or else, a video signal not displayable on this device has been inputted to the external input portion" stored in the storage portion 172 is obtained by the control portion 171. An OSD signal of the warning is generated by the OSD generating portion 174, and the screens shown in FIGS. 4A and 4B are displayed on the display 15 by the video signal processing portion 16 (step 204). After the step 204 or 205, it returns to the step 201 to repeat the process. As for the process, the warning display is continued in the case where the input is switched to the external input and the video signal is determined not to be 480i. However, it is also possible to erase (not display) the warning when certain time elapses from the warning display.

According to the CRT 1 of this embodiment as described above, it is possible, just by rewriting software of the microcontroller basically, to realize a function of "determining whether or not the video signal is in the format displayable by the CRT 1 and executing the warning display." It does not require addition of a special circuit configuration or the like for the function. Therefore, it is possible to provide at low cost a user-friendly graphic display device which can notify the user in the case where the inputted video signal is in an unsupported format. In the case of "the device capable of receiving a broadcast of HDTV but only displaying SDTV" as with this embodiment, there is a possibility that the user may think that "as the broadcast of HDTV is receivable, a signal of HDTV can be inputted from the external input portion" and also think that "the device is possibly out of order" if the video is not displayed. Application of the present invention is useful in that occurrence of such a problem can thereby be suppressed without increasing manufacturing cost of the device itself.

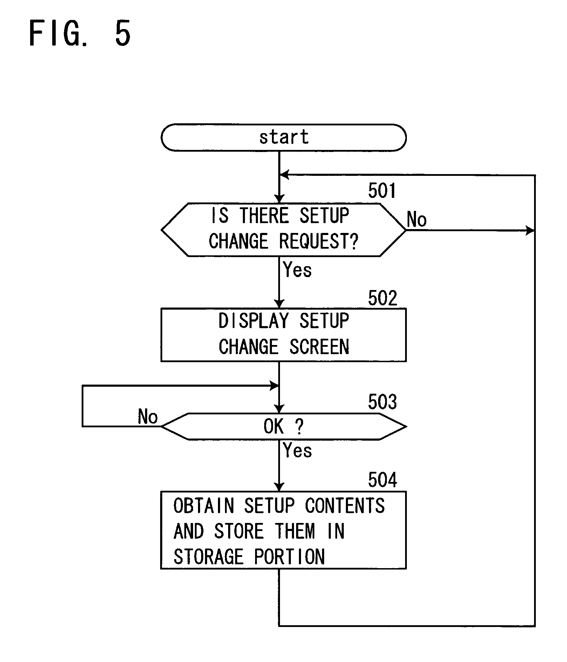

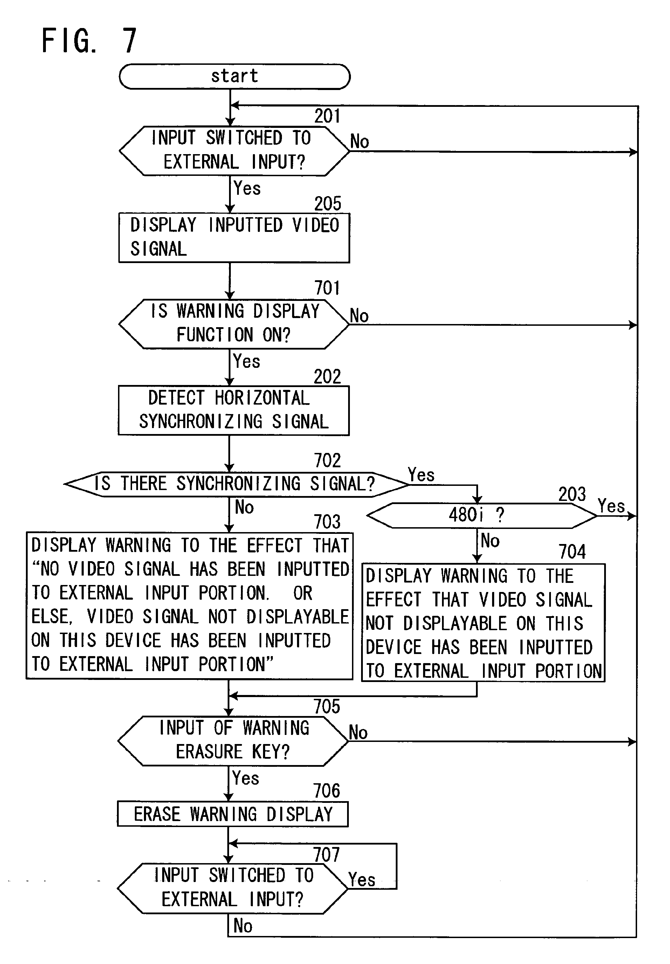

FIGS. 5 and 7 are flowcharts showing an overview of processing operation of the CRT of this embodiment according to the present invention. The configuration of the CRT of this embodiment is the same as that of the first embodiment, and so a description thereof will be omitted here but will be given by referring to FIG. 1 when necessary.

The storage portion 172 of the CRT 1 of this embodiment has the data on the warning information to the effect that "no video signal has been inputted to the external input portion. Or else, a video signal not displayable on this device has been inputted to the external input portion" and the data to the effect that "a video signal not displayable on this device has been inputted to the external input portion" stored therein. The storage portion 172 also has a reference parameter (the data indicating the range of 63 µs ± 10 % as an initial value) for determining whether or not the synchronizing signal extracted from the video signal inputted from the external device corresponds to the predetermined format (480i) stored therein.

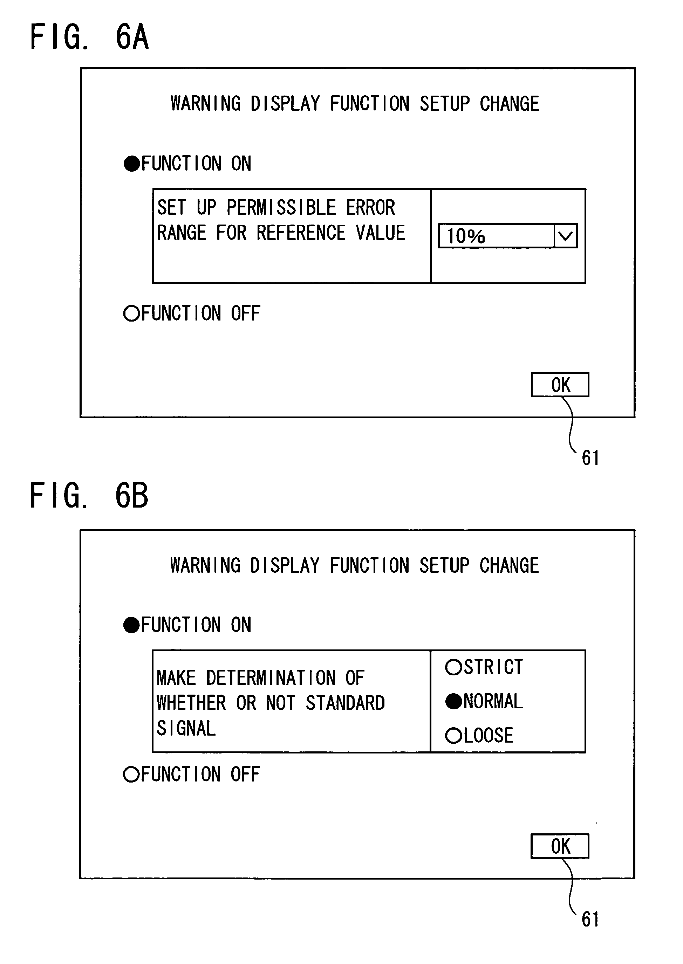

FIG. 5 is a flowchart showing an overview of the process for changing the setup of the "function of determining whether or not the video signal is in the format displayable by the graphic display device and displaying the warning. " In a step 501, a setup change screen as shown in FIG. 6A is displayed on the display 15 upon a "setup change request" from the operating portion 18 or the remote-control device 20 (step 502). The user changes the setup by operating the operating portion 18 or the remote-control device 20 while referring to the screen display, and selects an OK button 61 on finishing the setup. In the case where the input of the OK button 61 is detected, it moves on to a step 504 (step 503), obtains the setup contents (on/off setup of the function, and the data on the permissible error range for the reference value (63 µs) in the case of on) and stores it in the storage portion 172 (updates the reference parameter). According to this embodiment, the value of the reference parameter is directly changeable. It is also possible, by displaying a setup screen as shown in FIG. 6B in the step 502, to obtain the "reference parameter" assigned to an alternative in advance (such as setting it at 63 µs ± 15 % in the case of "loose") so as to indirectly change the value of the "reference parameter."

A description will be given by referring to FIG. 7 as to an overview of a processing operation of the CRT 1 in execution of the "function of determining whether or not the video signal is in the format displayable by the graphic display device and displaying the warning" which has been set up thereon by the above process. The same symbols are used as to those of the same processing concept as the first embodiment (FIG. 2), and a description thereof will be omitted or simplified here.

In the step 205 via the step 201, the video is displayed on the display 15 based on the video signal from the external input portion 13 (the CRT 1 only supports 480i, and so the video is not displayed on the screen depending on the inputted signal). In a subsequent step 701, it is determined whether or not the setup of a warning display function is on by referring to the storage portion 172 by means of the control portion 171. In the case where the setup is on as a result of the determination, it is determined whether or not the synchronizing signal has been detected in the horizontal synchronizing signal detection process in the step 202 (step 702).

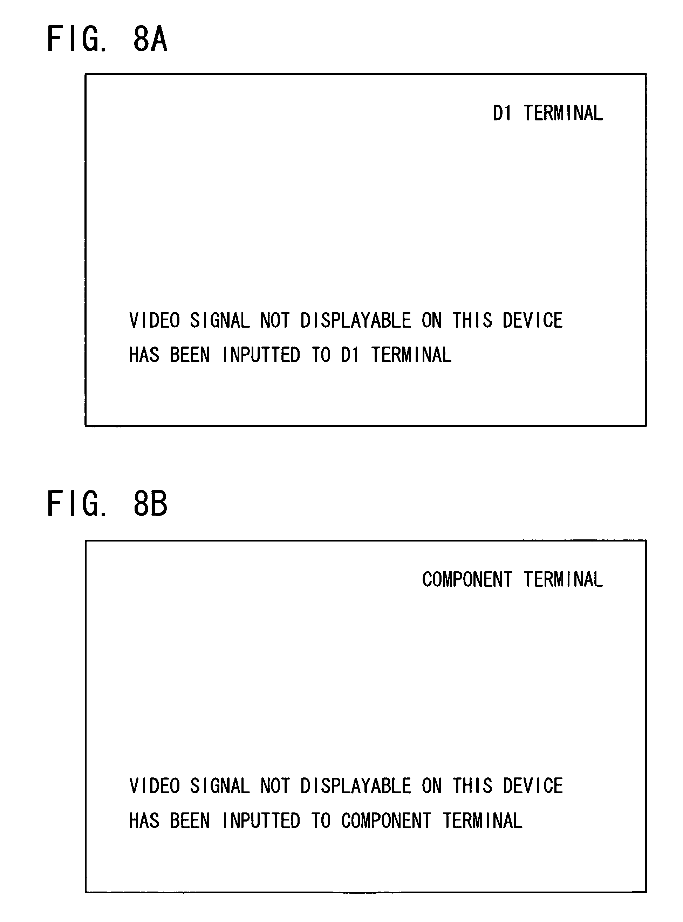

In the case where the synchronizing signal has been detected, it is determined whether or not it corresponds to the cycle of the horizontal synchronizing signal in the video format of 480i by using the reference parameter stored in the storage portion 172 in the step 203 (for instance, it is determined whether or not the cycle of the horizontal synchronizing signal of the video signal inputted from the external input portion 13 corresponds to the range of 63 µs ± 10 %). If determined that it does not correspond thereto (that is, in the case where some signal which has been inputted to the external input portion 13 is determined not to correspond to 480i), the data to the effect that "a video signal not displayable on this device has been inputted to the external input portion" stored in the storage portion 172 is obtained by the control portion 171 so as to display the screens shown in FIGS. 8A and 8B on the display 15 (step 704). In the case where the determination in the step 203 is affirmative (that is, in the case where the input signal is determined to correspond to 480i), it returns to the step 201 to repeat the process.

In the case where the determination in the step 702 is negative (the synchronizing signal has not been detected) (it is thinkable that detection of no synchronizing signal indicates that no video signal has been inputted to the external input portion 13. However, it is not always so because the video signal processing portion 16 only supports extraction of the synchronizing signal from the signal of 480i. To be more specific, there may be the cases where the synchronizing signal cannot be extracted because a signal other than that of 480i has been inputted), the data to the effect that "no video signal has been inputted. Or else, a video signal not displayable on this device has been inputted to the external input portion" is obtained from the storage portion 172 by the control portion 171 so as to display the screens shown in FIGS. 4A and B on the display 15 (step 703) .

In a step 705 after displaying a warning screen (step 703 or 704), it is determined whether or not there has been an input of a "warning erasure key" provided to the operating portion 18 or the remote-control device 20. In the case where there has been the input, the warning display is stopped (step 706) . As for the process of a step 707, it waits until the external input portion 13 is no longer selected as the video source so that, in the case where there is the input of the "warning erasure key, " the warning is not displayed until the selection of the video source is switched once (it may also be a process of waiting for, for example, "elapse of predetermined time" or waiting for a "change of the signal (such as a change in whether or not the synchronizing signal is detected or a change of the cycle)" instead of "waiting for the input switch").

According to this embodiment as above, the contents of the warning display change (the problem is identified further in detail) according to the situation of detection of the synchronizing signal, and so a more user-friendly device can be provided. The user can set up the range for determining that the synchronizing signal extracted from the video signal inputted from the external input portion 13 "does not correspond to the predetermined format," that is, what degree of error of the synchronizing signal against the synchronizing signal in the predetermined format warrants the determination. This increases convenience for the user. To be more specific, if fast-forward or rewind reproduction is performed in the case where the external apparatus is a VCR for instance, the synchronizing signal may deviate from a standard signal. If the warning is displayed each time in such cases, it is cumbersome for the user. The configuration allows the user to set up the range for determining that the signal is "not compliant with the predetermined format," and so it is very convenient for the user. It is also very convenient for the user that the warning can be erased just by inputting the "warning erasure key" during the warning display.

According to the embodiments, it is determined whether or not the signal corresponds to the "video signal in the predetermined format" by comparing the cycles of the horizontal synchronizing signals. However, it is also possible to compare frequencies, vertical synchronizing signals or both the horizontal synchronizing signals and vertical synchronizing signals.

The embodiments were described by taking the graphic display device (CRT) only supporting 480i as an example. However, the present invention is also effectively applicable to a device which supports 480i and 480p but does not support 720p and 1080i with the same concept as above (it is also applicable to a device which only supports a high resolution). The embodiments used the CRT capable of receiving the analog and digital broadcasting as an example of the graphic display device. However, it does not need to be capable of receiving both the analog and digital broadcasting (or capable of receiving the HDTV broadcasting) (not an essential configuration requirement of the present invention). The display device does not need to be the CRT (may also be a liquid crystal display, a plasma display or the like).

## Claims

1. A graphic display device comprising:
a display;
a tuner portion for receiving a broadcast signal of each frequency;
a received signal conversion portion for converting the broadcast signal inputted from the tuner portion into a video signal compliant with a predetermined format;
an external input portion for inputting a signal from an external device;
a video signal processing portion for displaying the video signal compliant with the predetermined format on the display, the video signal processing portion capable of extracting a synchronizing signal included in the video signal in the case where the video signal inputted from the received signal conversion portion or the external input portion is the signal compliant with the predetermined format; and
a control portion, and **characterized in that**:
a storage portion having warning information stored therein and an OSD generating portion are provided so that, in the case where the synchronizing signal extracted by the video signal processing portion is determined not to be the synchronizing signal compliant with the predetermined format by the control portion, a warning based on the warning information is displayed on the display by the OSD generating portion and the video signal processing portion.

2. The graphic display device according to claim 1, **characterized in that** the external input portion is a D video terminal or a component video terminal.

3. The graphic display device according to claim 1 or 2, **characterized in that** the predetermined format is a video format of 480i, and the video signal processing portion has a circuit configuration for displaying a video signal compliant with the video format of 480i on the display.

4. The graphic display device according to any one of claims 1 to 3, **characterized in that**:
the warning information includes a warning to the effect that "no video signal has been inputted to the external input portion, or a video signal not displayable on the device has been inputted to the external input portion" and a warning to the effect that "a video signal not displayable on the device has been inputted to the external input portion";
the warning based on the former warning information is displayed in the case where it is determined by the control portion that there is no synchronizing signal extracted by the video signal processing portion; and
the warning based on the latter warning information is displayed in the case where it is determined by the control portion that although there is the synchronizing signal extracted by the video signal processing portion, it is not the synchronizing signal compliant with the predetermined format.

5. The graphic display device according to any one of claims 1 to 4, further comprising:
an operating portion as a user interface, and **characterized in that**:
a warning erasure key is provided to the operating portion so as not to display the warning in the case where there is an input of the warning erasure key during display of the warning.

6. The graphic display device according to any one of claims 1 to 5, further comprising:
an operating portion as a user interface, and **characterized in that**:
a reference parameter for determining whether or not the synchronizing signal extracted by the video signal processing portion is compliant with the predetermined format is stored in the storage portion; and
if there is a setting change instruction to the operating portion from a user, the reference parameter is changed according to the instruction and stored in the storage portion.
